# EUROPEAN PATENT APPLICATION

(11) **EP 1 122 732 A1**
(43) Date of publication of application: **08.08.2001**
(21) Application number: 01200356.2
(22) Date of filing: 31.01.2001
(51) Int. Cl.: G11B 33/04

(54) **Container for a flat information carrier and storage rack comprising three or more of such containers**

(30) Priority: 31.01.2000 NL 1014238
(71) Applicant: Schoots, Cornelis Pieter, 8226 CA Lelystad (NL); Toepoel, Johannes Cornelis A. P. W., 5051 HZ Goirle (NL)
(72) Inventor: Schoots, Cornelis Pieter, 8226 CA Lelystad (NL)
(74) Representative: Aalbers, Arnt Reinier

(57) **Abstract**

The invention relates to a holder for a flat data carrier, such as e.g. a compact disc, comprising at least two, preferably flat or substantially flat parts which, in the closed position of the holder, define a flat or a substantially flat cavity for receiving a data carrier. The parts are interconnected by means of a pivot, which enables the parts to pivot about an axis which extends perpendicularly or substantially perpendicularly with respect to said flat cavity. In a preferred embodiment, the holder comprises one or more means of attachment, by which the holder can be attached to an identical or a comparable holder.

## Description

The invention relates to a holder for a flat data carrier, such as e.g. a compact disc, comprising at least two, preferably flat or substantially flat parts which, in the closed position of the holder, define a flat or a substantially flat cavity for receiving a data carrier.

Such holders are well-known and are used, among other things, for shipping and storing data carriers, such as compact discs (CD's), CD-ROM, CDr, DVD, etc. A well-known example is the commercially available, industrially standardised holder for compact discs, which consists of a square bottom part and a square lid. Said parts are each made from a plastic material by means of an injection moulding process, and joined together in a separate operation, whereupon said parts can pivot relative to each other about an axis through one of the edges (the rear edge) of the holder.

In addition to that, many types of thin sleeves of plastic, cardboard, paper or a combination thereof are known.

The object of the present invention is to provide an improved holder of the kind referred to in the introduction.

In order to accomplish that objective, the holder according to the invention is characterised in that said parts are interconnected by means of a pivot, which enables the parts to pivot about an axis which extends perpendicularly or substantially perpendicularly with respect to said flat cavity.

Such holders can be thin and at the same time of robust construction. Moreover, the holders can be opened via the edge by pivoting the parts relative to each other (rather than folding them open), so that data carriers stored therein remain accessible when a number of said holders are stacked or arranged in side-y-side relationship.

Preferably, said pivot is located at or near the edge of the holder. If the holder is square or rectangular, the pivot is preferably located in or near one of the corners of the holder. In such configurations the parts which, in the closed position of the holder, define a flat or substantially flat cavity for receiving a data carrier, can be pivoted almost completely away from each other, and the aforesaid cavity is very well accessible.

In another preferred embodiment, the holder comprises one or more means of attachment, by which the holder can be connected to an identical or a comparable holder, so that, for example, a well-ordered cassette is obtained.

If the holder comprises two or more means of attachment, said means of attachment are preferably all fixed to the same part of the holder. In that case the other part of the holder is not obstructed by the means of attachment upon being connected to another holder.

The invention further relates to a cassette for storing flat data carriers, such as compact discs, for example, comprising three or more holders according to any one of the preceding claims, which are attached together in side-by-side relationship.

The invention will now be explained in more detail with reference to the figures, which schematically show an exemplary embodiment of the holder according to the invention.

Fig. 1 shows a number of parts of a holder according to the invention in top plan view and some of said parts in side elevation.

Fig. 2 is a top plan view of a holder according to the invention in assembled condition.

Fig. 3 is a side view of a stack of five interconnected holders, which are each identical to the holder that is shown in Fig. 2.

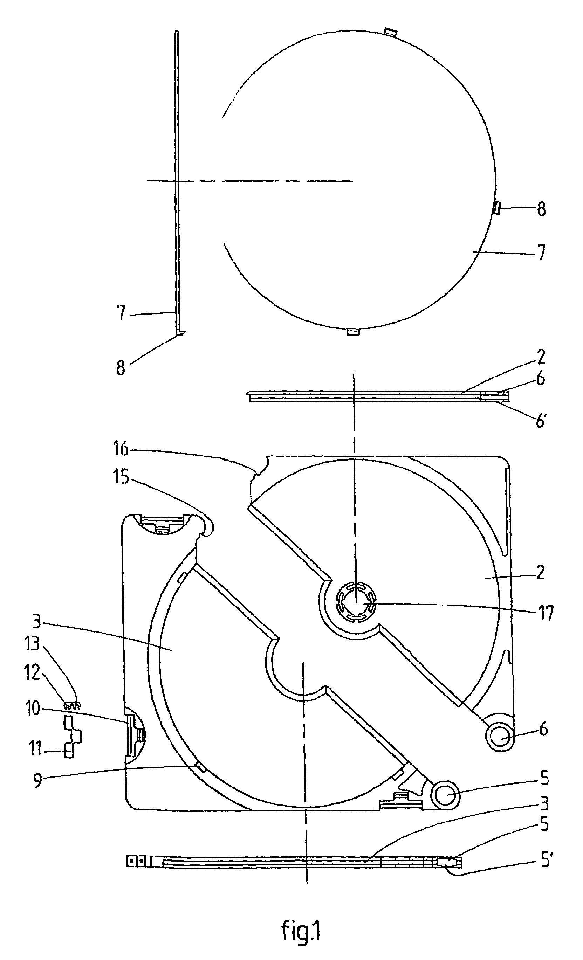

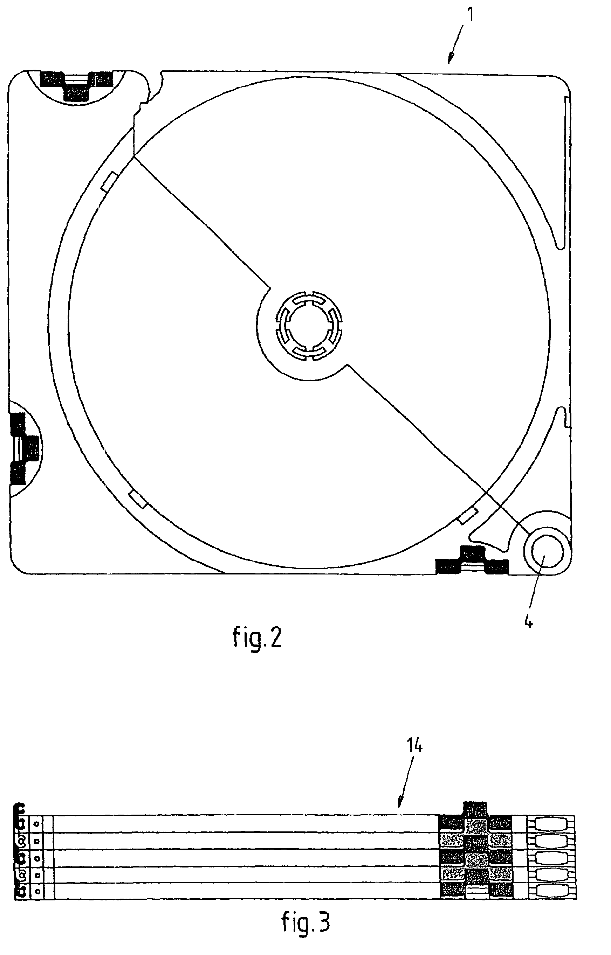

Figs. 1 and 2 show a rectangular holder 1 comprising a first part 2 and a second part 3, which define a flat or substantially flat cavity for receiving a data carrier in the closed position of the holder, and which in this specific embodiment form the bottom plate of holder 1 and define the external dimensions of the holder 1. Holder 1 includes a pivot 4 near one of its corners, by means of which said parts can pivot about an axis which extends perpendicularly or substantially perpendicularly with respect to the flat cavity. Pivot 4 comprises two round cams 5, 5' positioned on either side of first part 2, and two rings 6, 6', which are positioned on either side of second part 3 and which rotatably engage round cams 5, 5'.

First part 2 furthermore comprises a disc-shaped, detachable plate 7, which is circumferentially provided with three resilient lips 8. Plate 7 is snapped with its resilient lips 8 into three openings 9 corresponding to said resilient lips 8. Plate 7 may be made of a transparent material, for example, and/or be provided with a picture or a text.

Plate 7 may be left out, so that the cavity for receiving the data carrier is open on one side, or, conversely, forms an integral whole with the first part 2. Furthermore it is possible to form first part 2 as well as second part 3 with a flat portion, which is at least as large as the data carrier to be stored.

First part 2 comprises three means of attachment, by means of which holder 1 can be attached to an identical or a comparable holder. In this embodiment the means of attachment each comprise a bar or rod 10 and a clip 11. Clips 11 each comprise two first clamps 12, by means of which they are attached to a respective rod 10, and one second clamp 13. In the starting position, the clips 11 are recessed in the surface of first part 2 of holder 1. By pivoting clips 11 through an angle of 90 degrees, a connection can be made between the second clamp 13 of clip 11 and the rod of an adjacent holder, as is shown in Fig. 3, in order to form a cassette 14 in this manner.

It is also possible to combine the clips or other means of attachment into, for example, a strip to which a number of holder can be coupled. Furthermore it is possible to provide a rack or frame, to which or in which fastening strips or a few clips are fixed over various lengths and/or in various forms, for example in the form of a line, a square, a triangle or a circle. In that case the holders can be stored according to a system to be selected by the user.

First part 2 includes a recess 15, which, upon closing of the holder 1, effects a snap connection at the location of the corner positioned diametrically opposite pivot 4 with a cam 16 present on second part 3.

Second part 3 furthermore includes a ring 17 of resilient lips, to which a CD, for example, can be attached. Parts 2 and 3 and plate 7 of the holder according to the invention are preferably made from a plastic, such as polystyrene, polyABS, polyacrylate, polycarbonate, Surlin™ by means of an injection moulding process. Said means of attachment are preferably made from a flexible plastic, such as a polyolefin or Hostaform™.

From the foregoing it will be understood that the invention provides a holder for data carriers which is robust and thin. In addition, the present holders can either be used as an independent holder or be arranged in abutting, side-by-side relationship and/or be interconnected, whilst it remains possible to open each individual holder and to remove the data carrier stored therein.

Apart from that, the cavity for receiving the data carrier need not be completely closed. When stacking the holders or arranging them in side-by-side relationship it is especially important, in order to prevent the stored data carrier from being damaged, that the data carrier does not directly abut against an adjacent holder.

The invention is not limited to the embodiment as described above and shown in the drawing, which can be varied in several ways without departing from the scope of the invention as defined in the claims. It stands to reason that the shape and the dimension of the holder can be selected so that the holder will be capable of receiving relatively large data carriers, such as a gramophone record, for example, or data carriers which are not round, such as tape cassettes, for example.

## Claims

1. A holder for a flat data carrier, such as e.g. a compact disc, comprising at least two, preferably flat or substantially flat parts which, in the closed position of the holder, define a flat or a substantially flat cavity for receiving a data carrier, **characterized in that** said parts are interconnected by means of a pivot, which enables the parts to pivot about an axis which extends perpendicularly or substantially perpendicularly with respect to said flat cavity.

2. A holder according to claim 1, wherein said pivot is located at or near the edge of the holder.

3. A holder according to claim 1 or 2, which holder is square or rectangular, and wherein said pivot is located in or near one of the corners of the holder.

4. A holder according to any one of the preceding claims, which holder comprises one or more means of attachment, by which the holder can be attached to an identical or a comparable holder.

5. A holder according to claim 4, which holder comprises two or more means of attachment, which are all fixed to the same part of the holder.

6. A holder according to any one of the claims 4 or 5, wherein said means of attachment are rotatably connected to the holder.

7. A holder according to any one of the claims 4-6, wherein said means of attachment comprise at least two parallel clamps.

8. Holder according to any one of the preceding claims, wherein said holder for receiving a data carrier is defined by two parts, which also substantially define the external dimensions of the holder.

9. A cassette for storing flat data carriers, such as compact discs, for example, comprising three or more holders according to any one of the preceding claims, which are attached together in side-by-side relationship.
